# DEMANDE DE BREVET EUROPEEN

(11) **EP 0 728 643 A1**
(43) Date de publication de la demande: **28.08.1996**
(21) Numéro de dépôt: 96102475.9
(22) Date de dépôt: 19.02.1996
(51) Int. Cl.: B60S 1/40

(54) **Essuie-glace comportant un connecteur perfectionné pour le montage de l'articulation d'un balai d'essuie-glace à l'extrémité du bras d'essuie-glace**

(30) Priorité: 22.02.1995 FR 9502152
(71) Demandeur: VALEO SYSTEMES D'ESSUYAGE, 78321 La Verrière (FR)
(72) Inventeur: Giraud, Frédéric, 63000 Clermont-Ferrand (FR)
(74) Mandataire: Gamonal, Didier

(57) **Abrégé**

L'invention propose un essuie-glace du type comportant un bras d'essuie-glace (12) dont une extrémité recourbée en forme de crochet en U reçoit le corps (22) de forme complémentaire d'une pièce de montage et d'articulation d'un balai d'essuie-glace comportant une tige transversale (14) d'articulation, caractérisé en ce que, avant son montage dans le crochet, le corps (22) de la pièce de montage (10) présente une hauteur qui est supérieure à la hauteur (H2) séparant les faces internes en vis-à-vis (24, 26) des branches parallèles (16, 18) du crochet.

## Description

La présente invention concerne un essuie-glace de véhicule automobile.

L'invention concerne plus particulièrement un essuie-glace du type comportant un bras d'essuie-glace dont une extrémité recourbée en forme de crochet en U reçoit le corps de forme complémentaire d'une pièce de montage et d'articulation d'un balai d'essuie-glace comportant une tige transversale d'articulation dont un tronçon est reçu dans un logement cylindrique complémentaire formé dans le corps de la pièce de montage et qui débouche transversalement dans une face longitudinale inférieure de celui-ci par une fente d'introduction transversale de la tige d'articulation, et du type dans lequel la pièce de montage est montée en position dans le crochet en l'introduisant longitudinalement entre les faces internes en vis à vis des branches parallèles supérieure et inférieure du crochet en U.

Selon cette conception connue, la pièce de montage, également appelée connecteur, permet d'assurer l'accrochage d'un balai d'essuie-glace à l'extrémité libre en forme de crochet du bras d'essuie-glace.

Le connecteur est notamment interposé entre le crochet et un tronçon d'un axe d'articulation porté par un étrier principal d'une structure articulée du balai d'essuie-glace servant à répartir la pression d'essuyage sur une raclette d'essuyage.

Le connecteur est réalisé sous la forme d'une pièce moulée en matière plastique qui, après avoir été emboîtée élastiquement sur le tronçon de la tige d'articulation, est introduite longitudinalement dans le crochet.

Il est souhaitable que, une fois en position montée, il n'existe pas de jeu transversal entre les faces parallèles supérieure et inférieure du corps du connecteur et les faces internes en vis-à-vis des branches du crochet de façon à éviter tout mouvement parasite qui est générateur de bruits nuisibles au confort des passagers.

Le dimensionnement du logement cylindrique du connecteur dans lequel est reçu le tronçon de la tige d'articulation doit également être tel qu'il subsiste le moins de jeu possible entre la paroi interne de ce logement et la surface périphérique cylindrique du tronçon de la tige d'articulation.

Les tolérances de fabrication en grande série de l'extrémité en forme de crochet en U du bras d'essuie-glace et de la tige d'articulation ne permettent pas de garantir, de manière fiable, l'absence de ces jeux nuisibles.

L'invention a pour but de proposer une nouvelle conception de la pièce de montage et de raccordement qui permet de remédier aux inconvénients qui viennent d'être mentionnés, quelles que soient les tolérances de fabrication de l'extrémité en forme de crochet en U du bras d'essuie-glace et de la tige d'articulation.

Dans ce but, l'invention propose un essuie-glace du type mentionné précédemment, caractérisé en ce que, avant son montage dans le crochet, le corps de la pièce de montage présente une hauteur qui est supérieure à la hauteur séparant les faces internes en vis-à-vis des branches parallèles du crochet.

Selon d'autres caractéristiques de l'invention :
- le corps de la pièce de montage est déformable élastiquement entre une position de repos avant montage et une position montée dans laquelle il est serré verticalement entre les faces internes des branches parallèles du crochet ;
- le corps de la pièce de montage comporte deux parties longitudinales articulées entre elles autour d'un axe transversal ;
- les deux parties sont reliées entre elles par une portion supérieure constituant une charnière, déformable élastiquement, d'articulation des deux parties du corps de la pièce de montage ;
- chacune des deux parties du corps de la pièce de montage comporte des faces supérieure et inférieure parallèles et la hauteur séparant ces faces parallèles est inférieure à la hauteur séparant les faces internes en vis-à-vis des branches du crochet ;
- l'axe d'articulation des deux parties de la pièce de montage est sensiblement confondu avec l'axe du logement qui reçoit le tronçon de la tige d'articulation;
- en position de repos de la pièce de montage, les dimensions du logement sont supérieures au diamètre du tronçon de la tige d'articulation ;
- la pièce de montage est une pièce moulée en matière plastique ;
- le corps de la pièce de montage comporte deux ailes latérales parallèles entre lesquelles sont reçues les faces latérales parallèles du crochet du bras d'essuie-glace ;
- il est prévu des moyens de verrouillage en position montée de la pièce de montage dans le crochet.

D'autres caractéristiques et avantages de l'invention apparaîtront à la lecture de la description détaillée qui va suivre pour la compréhension de laquelle on se reportera au dessin annexé dans lequel :
- La figure 1 est une vue latérale en élévation d'une pièce de montage et de raccordement réalisée conformément aux enseignements de l'invention ; et
- la figure 2 est une vue latérale en élévation de la pièce de montage représentée à la figure 1 qui est illustrée en position montée dans l'extrémité en forme de crochet en U d'un bras d'essuie-glace.

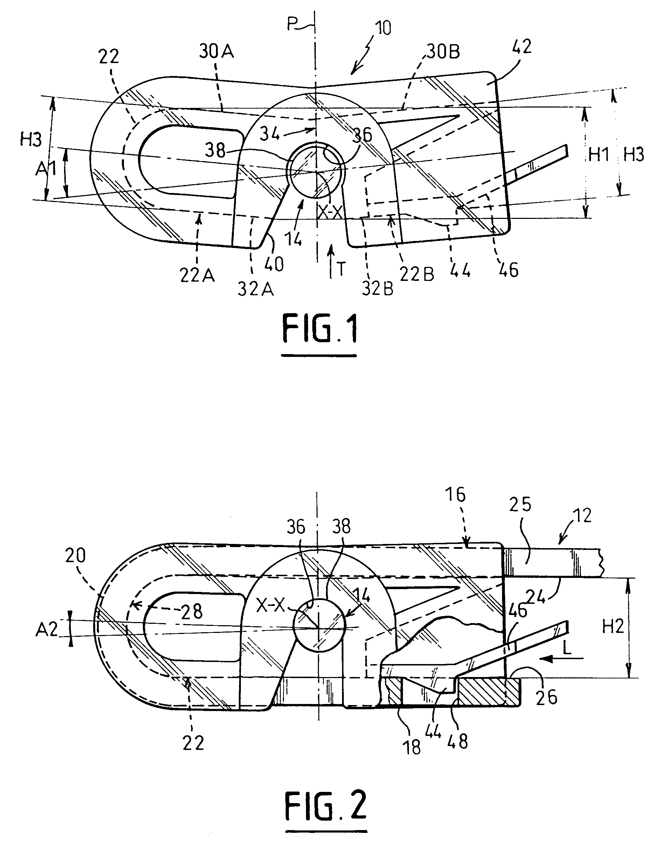

On a représenté sur la figure 1 une pièce de montage et d'articulation 10, également appelée connecteur, qui est une pièce moulée en matière plastique qui est destinée à assurer le montage de manière articulée d'un bras d'essuie-glace 12 (voir figure 2) sur une tige transversale d'articulation 14, appartenant à un balai d'essuie-glace non représenté sur les figures, qui s'étend selon une direction transversale perpendiculaire à la direction longitudinale générale du bras d'essuie-glace 12 et du balai d'essuie-glace.

Comme on peut le voir sur la figure 2, le bras d'essuie-glace est réalisé sous la forme d'une tige métallique aplatie dont le tronçon d'extrémité est recourbé en crochet en forme de U allongé.

Le crochet comporte une branche longitudinale supérieure 16 et une branche longitudinale inférieure 18 qui sont reliées entre elles par une branche de raccordement 20 recourbée en demi-cercle.

Les branches 16, 18 et 20 délimitent entre elles un logement destiné à recevoir le corps 22 de la pièce de raccordement 10.

Ce logement est notamment délimité par les faces longitudinales internes et parallèles en vis-à-vis 24 et 26 des branches 16 et 18, ainsi que par la face interne semi-cylindrique 28 de la branche recourbée 20.

L'extrémité en forme de crochet du bras d'essuie-glace 12 est réalisée par pliage et les faces internes en vis-à-vis 24 et 26 sont séparées par une hauteur H2.

Comme on peut le voir sur la figure 1, le corps 22 du connecteur 10 est constitué pour l'essentiel par deux parties 22A et 22B situées de part et d'autre d'un plan transversal vertical médian P.

Chacune des deux parties 22A, 22B est délimitée par une face longitudinale supérieure 30A, 30B et par une face longitudinale inférieure 32A, 32B parallèles entre elles.

La distance ou hauteur H3 séparant les faces 30A, 32A et 30B, 32B est, par conception, inférieure à la distance H2.

Comme on peut le voir sur la figure 1, dans la position de repos du connecteur 10, c'est-à-dire avant son montage dans le crochet en forme de U du bras d'essuie-glace 12, les faces 30A, 32A et 30B, 32B des deux parties 22A et 22B du corps 2 du connecteur 10 forment entre elles un angle A1.

Ainsi, la hauteur globale H1 du corps 22 du connecteur 10, en position de repos, est supérieure non seulement à la hauteur H3, mais il est, de par la conception selon l'invention, supérieur à la hauteur H2.

Les deux parties 22A, 22B du corps 22 du connecteur 10 sont reliées entre elles, au niveau du plan longitudinal médian par une partie supérieure 34 qui constitue une charnière d'articulation élastique entre les deux parties 22A, 22B.

Selon une conception connue, la partie centrale du corps 22, située dans le plan transversal médian P comporte un logement 36 de forme générale cylindrique qui est destiné à recevoir un tronçon 38 de la tige d'articulation 14.

Afin de permettre l'introduction transversale, selon la direction T de la figure 1, du tronçon 38 dans le logement 36, ce dernier débouche transversalement dans la face inférieure du connecteur 10 par une fente 40.

Comme on peut le voir sur la figure 1, avant le montage du connecteur 10 dans le crochet du bras d'essuie-glace 12, les dimensions de la fente 40 sont telles que le tronçon 38 est reçu avec jeu radial dans le logement 36 et que son introduction dans le logement est rendue particulièrement aisée, sans déformation élastique particulière du connecteur 10.

Enfin, selon une conception connue, le connecteur 10 est délimité latéralement par deux ailes latérales parallèles 42 entre les faces internes desquelles sont reçues les faces latérales parallèles 25 des branches 16, 18 et 20 du crochet du bras d'essuie-glace 12.

Le connecteur 10 comporte enfin un bec de verrouillage 44 qui est agencé sur une patte déformable élastique 46 et qui est destiné à être reçu dans un trou 48 formé dans la branche longitudinale inférieure 18 du crochet du bras d'essuie-glace 12 de manière, en position montée et comme cela est illustré sur la figure 2, à immobiliser le connecteur 10 par rapport au crochet du bras d'essuie-glace 12.

Lors du montage, et après avoir mis en place le connecteur 10 sur la tige d'articulation 14, cet ensemble est introduit longitudinalement, selon la direction de la flèche L de la figure 2, à l'intérieur du crochet.

Lors de cette introduction, et parce que la hauteur H1 est supérieure à la hauteur H2, le corps 22 du connecteur 10 est déformé élastiquement dans sa partie formant charnière 34 de manière que les deux parties 22A et 22B pivotent l'une par rapport à l'autre autour d'un axe géométrique X-X qui est sensiblement confondu avec l'axe géométrique du logement 36 de manière à permettre l'insertion par emboîtement élastique du corps 22 dans le logement délimité par les faces internes parallèles 24 et 26 des branches 16 et 18 du crochet du bras d'essuie-glace 12.

Ainsi, en position montée, le connecteur 10 est monté avec serrage en hauteur et il ne subsiste aucun jeu parasite entre ces deux composants.

Le pivotement des deux parties 22A et 22B l'une par rapport à l'autre a pour effet de réduire l'angle A1 à un angle A2, cette réduction correspondant à un resserrement des deux faces en vis-à-vis de la fente 40 qui aboutit à une réduction des dimensions du logement cylindrique 36 dont la paroi vient épouser la paroi cylindrique convexe du tronçon 38 de la tige d'articulation 14 supprimant ainsi tout jeu radial parasite entre la tige d'articulation 14 et le connecteur 10.

Comme on peut le voir grâce à l'arrachement partiel de la figure 2, le bec de verrouillage 44 est reçu dans le trou 48 de la branche longitudinale inférieure 18.

## Revendications

1. Essuie-glace de véhicule automobile du type comportant un bras d'essuie-glace (12) dont une extrémité recourbée en forme de crochet en U reçoit le corps (22) de forme complémentaire d'une pièce de montage et d'articulation (10) d'un balai d'essuie-glace comportant une tige transversale (14) d'articulation dont un tronçon (38) est reçu dans un logement cylindrique (36) complémentaire formé dans le corps (22) de la pièce de montage (10) et qui débouche transversalement dans une face longitudinale inférieure (32A, 32B) de celui-ci (22) par une fente (40) d'introduction transversale de la tige d'articulation (14, 38), et du type dans lequel la pièce de montage (10) est montée en position dans le crochet en l'introduisant longitudinalement (L) entre les faces internes (24, 26) des branches parallèles supérieure (16) et inférieure (18) du crochet en U, caractérisé en ce que, avant son montage dans le crochet, le corps (22) de la pièce de montage (10) présente une hauteur (H1) qui est supérieure à la hauteur (H2) séparant les faces internes en vis-à-vis (24, 26) des branches parallèles (16, 18) du crochet.

2. Essuie-glace selon la revendication 1, caractérisé en ce que le corps (22) de la pièce de montage (10) est déformable élastiquement entre une position de repos avant montage et une position montée dans laquelle il est serré verticalement entre les faces internes (24, 26) des branches parallèles (16, 18) du crochet.

3. Essuie-glace selon la revendication 2, caractérisé en ce que la pièce de montage (10) comporte deux parties longitudinales (22A, 22B) articulées entre elles autour d'un axe transversal (X-X).

4. Essuie-glace selon la revendication 3, caractérisé en ce que les deux parties (22A, 22B) sont reliées entre elles par une portion supérieure (34) constituant une charnière, déformable élastiquement, d'articulation des deux parties (22A, 22B) du corps (22) de la pièce de montage (10).

5. Essuie-glace selon l'une des revendications 3 ou 4, caractérisé en ce que chacune des deux parties (22A, 22B) du corps (22) de la pièce de montage (10) comporte des faces supérieure (30A, 30B) et inférieure (32A, 32B) parallèles, et en ce que la hauteur (H3) séparant ces faces parallèles est inférieure à la hauteur (H2) séparant les faces internes en vis-à-vis (24, 26) des branches longitudinales parallèles (16, 18) du crochet.

6. Essuie-glace selon l'une quelconque des revendications 3 à 5, caractérisé en ce que l'axe d'articulation (X-X) des deux parties (22A, 22B) de la pièce de montage (10) est sensiblement confondu avec l'axe du logement (36) qui reçoit le tronçon (38) de la tige d'articulation (14).

7. Essuie-glace selon la revendication 6, caractérisé en ce que, en position de repos de la pièce de montage, les dimensions du logement (36) sont supérieures au diamètre du tronçon (38) de la tige d'articulation (14).

8. Essuie-glace selon l'une quelconque des revendications précédentes, caractérisé en ce que la pièce de montage (10) est une pièce moulée en matière plastique.

9. Essuie-glace selon l'une quelconque des revendications précédentes, caractérisé en ce que le corps (22) de la pièce de montage (10) comporte deux ailes latérales parallèles (42) entre lesquelles sont reçues les faces latérales parallèles (25) du crochet du bras d'essuie-glace (12).

10. Essuie-glace selon l'une quelconque des revendications précédentes, caractérisé en ce qu'il est prévu des moyens (44, 48) de verrouillage en position montée de la pièce de montage (10) dans le crochet du bras d'essuie-glace (12).
